Europäisches Patentamt

European Patent Office

Office européen des brevets

(11) Publication number: **0 102 308 B1**

(12) **EUROPEAN PATENT SPECIFICATION**

(45) Date of publication of patent specification: **13.05.87**

(51) Int. Cl.⁴: **F 01 D 11/08**

(21) Application number: **83630099.6**

(22) Date of filing: **02.06.83**

(54) Clearance control for gas turbine engine.

(30) Priority: **02.08.82 US 404085**

(43) Date of publication of application:
**07.03.84 Bulletin 84/10**

(45) Publication of the grant of the patent:
**13.05.87 Bulletin 87/20**

(84) Designated Contracting States:
**DE FR GB**

(56) References cited:
**GB-A-2 062 117**
**GB-A-2 076 475**
**GB-A-2 089 439**
**US-A-4 019 320**

**MACHINE DESIGN, vol. 52, no. 3, 7 February
1980, Cleveland, Ohio, USA "Controlled cooling
boosts engine efficiency", pages 88, 89**

(73) Proprietor: **UNITED TECHNOLOGIES
CORPORATION**
**United Technologies Building 1, Financial Plaza
Hartford, CT 06101 (US)**

(72) Inventor: **Schwarz, Frederick Michael**
**162 Butler Drive**
**Glastonbury Connecticut 06033 (US)**

(74) Representative: **Weydert, Robert et al
OFFICE DENNEMEYER S.à.r.l. P.O. Box 1502
L-1015 Luxembourg (LU)**

Courier Press, Leamington Spa, England.

## Description

This invention relates to a fan jet engine for powering aircraft having a fan section, a compressor section and a turbine section having rotating blades and a turbine case, means internally cooling said turbine case, an active clearance control system including a plurality of spray bars circumscribing the exterior of said turbine case in proximity to the rotating blades of the turbine section, a source of cooling air from said fan section, ducting means interconnecting said spray bars with said source of cooling air, first valve means in said ducting means and control means for keeping said first valve means closed during high power operation and open at part power operation to supply cooling air from said fan section to the spray bars at part power operation.

It is well known in the gas turbine art that fuel economy is realized by maintaining a close gap between the tips of rotor blades and its peripheral seal. US—A—4,019,320 exemplifies such a system of the type described in the precharacterizing portion of claim 1.

In US—A—4 019 320, during part power operation, the exterior of the engine turbine case is cooled by cooling air impinged on the exterior of the engine case from the fan section of the engine. The effectiveness of the cooling air to provide shrinking of the turbine case is reduced in view of the fact that the engine turbine case is exposed, on the inner side thereof, to the heat of the turbine cooling air from the discharge end of the compressor, which is carried in proximity to the turbine case and is substantially warmer than the cooling air from the fan section.

GB—A—2 076 475 concerns a turbine shroud ring usually disposed within the outer turbine case and surrounding the tips of the turbine rotor blades. The shroud is provided with an insulating lining to restrict the flow of heat into the shroud ring from the hot working medium gases of the turbine to reduce the amount of cooling air to be directed to between the external turbine case and the shroud ring. GB—A—2 076 475 also provides for impinging compressor discharge air on the outer surface of the shroud ring to adapt expansion of the shroud ring to that of the turbine wheel.

It is also already known from GB—A—2 089 439 to cool the turbine case of an aircraft jet engine by air from two different compressor stages. In GB—A—2 089 439, during idle operation the turbine case is cooled by air from the 9th compressor stage, during cruise it is cooled by air from the 5th compressor stage, during climb it is cooled by a mixture of air from these two stages, and during take-off the case is cooled by air from the 9th stage of the compressor.

The object of the invention is to improve the fan jet engine turbine clearance control system of US—A—4 019 320 so as to increase the effectiveness of the cooling air impinged on the engine turbine case during part power operation to thereby provide a wider range of gap control.

To achieve this, in accordance with the invention, the fan jet engine is characterized in that an insulating lining means is attached to the inner circumference of said turbine case between said rotating blades and said spray bars for insulating the case from the heat of the internal turbine cooling air being carried in proximity thereto, that a source of heating air is provided from the compressor section and the ducting means also interconnects the spray bars with said source of heating air, that a second valve means is disposed in said ducting means and that the control means keeps said second valve means closed at part power operation and opens it at high power operation to supply heating air from said compressor section to the spray bars at high power operation.

This invention accordingly contemplates lining the inner wall of the turbine case with insulation material in the vicinity where gap clearance control is being utilized. Because of the use of the insulation, a heating source is added to impinge hot air on the case so as to allow for growth of the case in the engine operating modes which would otherwise be hindered by the insulation characteristics. The combination of insulation and heating and cooling the outer case affords the advantage of a wider range of gap control. As for example, where the gap excursion is in the range of 0,762 mm, it can be increased to 1,27 mm by virtue of this invention. In addition, this invention affords the advantages of allowing the flanges that are utilized for affecting contraction and expansion of the engine case to be reduced in size and the amount of cooling air necessary to contract the case is reduced.

Other features and advantages will be apparent from the specification and claims and from the accompanying drawings which illustrate an embodiment of the invention. In the drawings:

Fig. 1 is a partial view of an aircraft turbine type power plant shown in elevation and schematic illustrating the invention; and

Fig. 2 is a partial view of a section taken along the lines 2—2 of Fig. 1 illustrating the details of this invention and showing the inner diameter of the engine's case.

Impingement cooling of an aircraft engine case for maintaining gap control as noted above is disclosed in US—A—4,019,320, supra, and engines of the type exemplified by the JT9D model manufactured by Pratt & Whitney Aircraft, a division of United Technologies Corporation have typical active clearance controls, and for the sake of convenience and simplicity they are incorporated herein by reference.

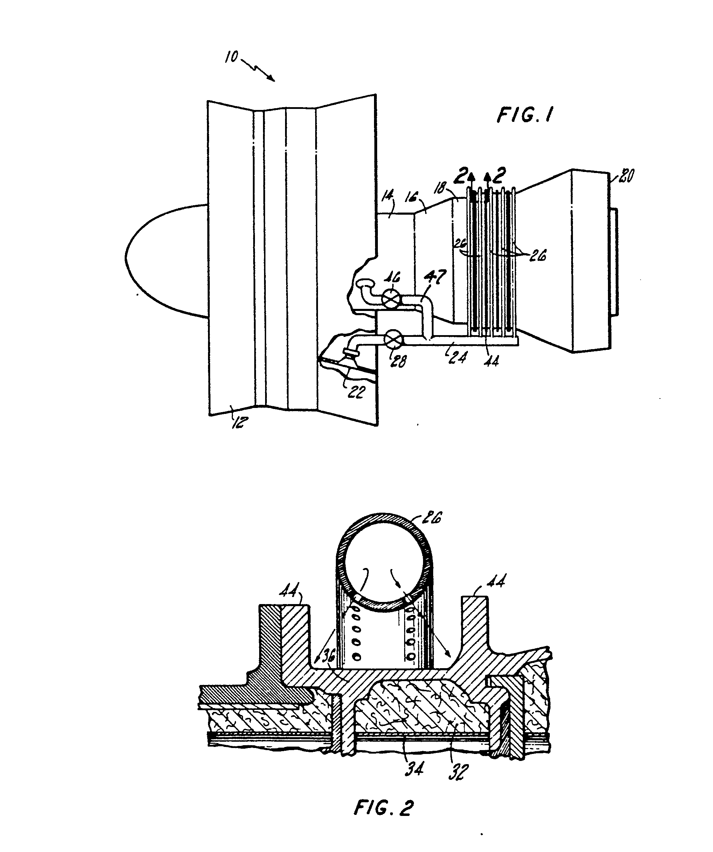

In both the examples above, cooling air is impinged on the outside of the unlined engine case to manifest the active clearance control. Typically, at a given point in the engine's operating envelope the cool air is turned on to impinge on the exterior of the engine case causing it to shrink in an attempt to follow the contraction of the blades and rotor adjacent thereto. As noted in Fig. 1, the turbo-fan engine generally indicated by reference numeral 10, typically has the fan section 12, compressor section 14, burner section 16, turbine section 18 and exhaust section 20. The active clearance control comprises the fan bleed air scoop 22 and line 24 that manifolds the fan discharge air to a plurality of spraybars 26 the circumscribe the engine case to impinge air thereon. At part power operation, the valve schematically shown as reference numeral 28 is turned on to impinge fan discharge air on the engine case.

As noted from Figs. 1 and 2, according to this invention the engine case is lined with insulation material 32 which is retained in contiguous relationship with the inner diameter by the sheath 34, formed from suitable sheet metal.

The sheath 34 serves to hold the insulation against the inner surface of casing 36 so as to avoid hot or cold spots occurring due to voids in the material. The insulation removes the influence of the approximately 540°C cooling air that is flowing within the case and leaves the case vulnerable to the cold air sprayed on the exterior of the case. Thus, by using hot and cold air impingement with insulation lining in the interior of the engine case, less cooling air is required to provide the same amount of gap control as was heretofore available. Or otherwise, it is possible for moving the case an extended amount say from 0,762 mm to 1.27 mm to achieve a closer gap control than was heretofore available. Also, it is possible to reduce the mass of the flanges 44 which receive the spray of hot and cold air.

The invention is intended to reduce or close the tipseal clearances during part power operation. During engine start-up, acceleration, and high power operation, the hot air valve 46 is kept open by an external control (not shown) and the cold air valve 28 is kept closed. Thus hot air fed through the line 47 interconnecting the spray bars 26 and a compressor station strikes and expands the turbine case and keeps the tipseals at a radius that allows the turbine to expand transiently without interference. Most importantly, this novel feature enables the case to expand quickly during transients, such as snap accelerations to take-off power, to get out of the way of the expanding rotor, despite the insulating material which would ordinarily encumber this response rate. In short, this part of the system enables the turbine tipseals to endure transients.

The active clearance control system of the invention maintains the steady-state temperature level of the case and provides the cold air system with an improved temperature reduction capability as will be described hereinbelow.

Once part power operation is achieved, an external control closes the hot air valve 46 and opens the cold air valve 28. Cold air strikes the case and thus the turbine case is shrunk and the tipseal clearance is closed. The insulated turbine case is an integral part of this operation since it removes the influence of the approximately 540°C cooling air running within the case and leaves the case vulnerable to the cold air sprayed on its exterior. Without this novel feature, the turbine case would see only a portion of the temperature reduction it is capable of, since the air within it would effectively control the temperature of the case.

Analytical studies have shown that this system can as much as double the reduction in tipseal clearance of the turbine as compared to a system that sprays air on case without any other treatment.

## Claims

1. Fan jet engine for powering aircraft having a fan section (12), a compressor section (14), a combustion section and a turbine section (16) having rotating blades and a turbine case, means internally cooling said turbine case, an active clearance control system including a plurality of spray bars (26) circumscribing the exterior of said turbine case in proximity to the rotating blades of the turbine section, a source of cooling air from said fan section (12), ducting means (24) interconnecting said spray bars (26) with said source of cooling air, first valve means (28) in said ducting means (24) and control means for keeping said first valve means closed during high power operation and open at part power operation to supply cooling air from said fan section (12) to the spray bars (26) at part power operation, characterized in that an insulating lining means (32) is attached to the inner circumference of said turbine case between said rotating blades and said spray bars (26) for insulating the case from the heat of the internal turbine cooling air being carried in proximity thereto, that a source of heating air is provided from the compressor section (14) and the ducting means (24) also interconnects the spray bars (26) with said source of heating air, that a second valve means (46) is disposed in said ducting means (24), and that the control means keeps said second valve means (46) closed at part power operation and opens it at high power operation to supply heating air from said compressor section (14) to the spray bars (26) at high power operation.

2. Fan jet engine according to claim 1, characterized in that a sheet metal sheath (34) is provided at the inner circumference of the lining means to hold it in contiguous relationship with the inner surface of said turbine case.

## Patentansprüche

1. Mantelstromtriebwerk zum Antreiben eines Flugzeuges, mit einem Fanabschnitt (12), einem Verdichterabschnitt (14), einem Verbrennungsabschnitt und einem Turbinenabschnitt (16), der Laufschaufeln und ein Turbinengehäuse aufweist, eine Einrichtung zur Innenkühlung des Turbinengehäuses, ein aktives Spaltsteuersystem mit mehreren Sprührohren (26), die die außenseite des Turbinengehäuses in der Nähe der Laufschaufeln des Turbinenabschnitts umgeben, einer Quelle für Kühlluft aus dem Fanabschnitt (12), einer Kanaleinrichtung (24), die die Sprührohre (26) mit der Kühlluftquelle verbindet, einer ersten Ventileinrichtung (28) in der Kanaleinrichtung (24) und einer Steuereinrichtung zum Geschlossenhalten der ersten Ventileinrichtung während des Betriebes mit hoher Leistung und zum Offenhalten beim Betrieb mit Teilleistung, um Kühlluft auf dem Fanabschnitt (12) den Sprührohren (26) bei dem Teilleistungsbetrieb zuzuführen, dadurch gekennzeichnet, daß eine isolierende Verkleidung (32) am Innenumfang des Turbinengehäuses zwischen den Laufschaufeln und den Sprührohren (26) befestigt ist, um das Gehäuse gegenüber der Wärme der inneren Turbinenkühlluft zu isolieren, die in der Nähe desselben transportiert wird, daß eine Quelle für Heizluft aus dem Verdichterabschnitt (14) vorgesehen ist und daß die Kanaleinrichtung (24) die Sprührohre (26) auch mit der Heizluftquelle verbindet, daß eine zweite Ventileinrichtung (46) in der Kanaleinrichtung (24) angeordnet ist und daß die Steureinrichtung die zweite Ventileinrichtung (46) bei Teilleistungsbetrieb geschlossen hält und bei Hochleistungsbetrieb öffnet, um Heizluft aus dem Verdichterabschnitt (14) den Sprührohren (26) bei Hochleistungsbetrieb zuzuführen.

2. Mantelstromtriebwerk nach Anspruch 1, dadurch gekennzeichnet, daß ein Blechmantel (34) an dem inneren Umfang der Verkleidung vorgesehen ist, um sie in Anlage an der Innenoberfläche des Turbinengehäuses zu halten.

**Revendications**

1. Réacteur à double flux pour la propulsion d'avions comprenant une section soufflante (12), une section compresseur (14), une section combustion (16) et une section turbine (18) comportant des aubes mobiles et un carter de turbine, des moyens qui refroidissent intérieurement ce carter de turbine, un système de contrôle actif d'espace intermédiaire comprenant plusieurs barres de projection (26) qui circonscrivent l'extérieur du carter de turbine à proximité des aubes mobiles de la section turbine, une source d'air de refroidissement en provenance de la section soufflante (12), des moyens de conduite (24) qui relient ces barres de projection (26) à la source d'air de refroidissement, des premiers moyens à soupape (28) dans les moyens de conduite (24) et des moyens de commande pour maintenir fermés ces premiers moyens à soupape pendant le fonctionnement à grande puissance et les maintenir ouverts lors du fonctionnement à puissance partielle pour alimenter en air les barres de projection (26), à partir de la section soufflante (12), lors du fonctionnement à puissance partielle, caractérisé en ce que des moyens de revêtement isolants (32) sont fixés sur la circonférence intérieure du carter de turbine, entre les aubes mobiles et les barres de projection (26), pour isoler le carter de la chaleur de l'air de refroidissement interne de la turbine qui est entraîné à proximité de ce carter, en ce qu'une source d'air de réchauffement est prévue à partir de la section compresseur (14) et les moyens de conduite (24) relient également les barres de projection (26) à cette source d'air de réchauffement, en ce que des seconds moyens à soupape (46) sont disposés dans ces moyens de conduite (24) et en ce que les moyens de commande maintiennent fermés ces seconds moyens à soupape (46) lors du fonctionnement à puissance partielle et les ouvrent lors du fonctionnement à grande puissance, afin d'alimenter les barres de projection (26) en air de réchauffement provenant de la section compresseur (14) lorsque le moteur fonctionné à grande puissance.

2. Réacteur à double flux selon la revendication 1, caractérisé en ce qu'une tôle de recouvrement (34) est disposée sur la circonférence intérieure des moyens de revêtement pour maintenir ceux-ci en rapport de contiguïté avec la surface intérieure du carter de turbine.

0 102 308

FIG. 1

FIG. 2